# EUROPEAN PATENT APPLICATION

(11) **EP 1 496 621 A1**
(43) Date of publication of application: **12.01.2005**
(21) Application number: 04253828.0
(22) Date of filing: 25.06.2004
(51) Int. Cl.: H04B 1/40

(54) **High-frequency composite component**

(30) Priority: 04.07.2003 JP 2003192287
(71) Applicant: SEIKO EPSON CORPORATION, Shinjuku-ku, Tokyo 163-0811 (JP)
(72) Inventor: Watanabe, Toru, Suwa-shi, Nagano-ken 392-8502 (JP); Takada, Yutaka, Suwa-shi, Nagano-ken 392-8502 (JP); Inoguchi, Makoto, Suwa-shi, Nagano-ken 392-8502 (JP); Yajima, Aritsugu, Suwa-shi, Nagano-ken 392-8502 (JP); Tanaka, Kazuaki, Suwa-shi, Nagano-ken 392-8502 (JP); Takagi, Shigekazu, Suwa-shi, Nagano-ken 392-8502 (JP)
(74) Representative: Sturt, Clifford Mark

(57) **Abstract**

The invention seeks to provide a high-frequency composite component capable of: simplifying the circuits from the antenna to the input side of the high-frequency amplifier circuit; suppressing a loss in the signal; and reducing the cost and the size, when a wireless system using plural frequency bands, such as a wireless LAN system using plural frequencies, is constructed. The high-frequency composite component is fabricated by placing an antenna 1 on a multi-layer wiring board 41, placing a multiplexer/demultiplexer circuit 2, matching circuits 3 and 4, and balanced-to-unbalanced transformer circuits 5 and 6 inside the board 41 respectively, and providing input and output terminals 7 through 10 on the side surface of the board 41. The antenna 1 is connected to the multiplexer/demultiplexer circuit 2 via an unbalanced line path 11, and the multiplexer/demultiplexer 2 is connected to the matching circuits 3 and 4 via unbalanced line paths 12 and 13, respectively. The matching circuits 3 and 4 are connected to the balanced-to-unbalanced transformer circuits 5 and 6, respectively, via unbalanced line paths 14 and 15, respectively. The respective balanced terminals of the balanced-to-unbalanced transformer circuits 5 and 6 are connected to the input and output terminals 7 and 8, and 9 and 10, respectively, via balanced line paths 16 and 17, respectively.

## Description

The invention relates to a high-frequency composite component used as part of the front end of a wireless communications device or the like, and is applied to wireless communications, for example, in a wireless LAN system.

Conventionally, a high-frequency composite component, such as a mobile phone, including, for example, a balanced-to-unbalanced transformer circuit (balun) and a multiplexer/demultiplexer circuit, which are composited inside a multi-layer wiring board, has been known (for example, JP-A-2002-217036, Fig. 1).

In the high-frequency composite component shown in the conventional example, the multiplexer/demultiplexer circuit processes an unbalanced signal. Hence, the multiplexer/demultiplexer circuit is able to demultiplex a single unbalanced signal having two different frequencies to two unbalanced signals and multiplex two unbalanced signals having different frequencies to a single unbalanced signal.

Also, because the conventional high-frequency composite component includes the balanced-to-unbalanced circuit, it is possible to transform a balanced signal to an unbalanced signal and vice versa.

A wireless LAN system, for example, has been chiefly used in a 2.4 GHz band; however, in order to comply with the newly established standards, a recent wireless LAN system needs to have the capability to be used in a 5 GHz band. The system also needs to have the capability to be selectively used in both the 2.4 GHz and 5 GHz bands. In order to meet these needs, the construction of a wireless LAN system with the support for more than one frequency band is expected.

The same can be said for a mobile phone in regard to the tendency of using more than one frequency band, and a good example would be a dual-band-capable mobile phone usable in both a 900 MHz band and a 1.8 GHz band in GSM.

In such a wireless system that uses plural bands with remote usable frequencies, in a case where a common amplifier is used, the amplifier has to secure an extremely wide-band characteristic. However, due to the problems in terms of power efficiency and the characteristic, it is general to use plural high-frequency amplifiers, one for each usable frequency.

For example, it is general to use an individual amplifier for each band in a terminal for plural frequencies including the 2.4 GHz and the 5 GHz band in the wireless LAN system.

Also, an RF-IC chip, which is chiefly used in the wireless system and in which, in addition to the amplifier, a mixer, an oscillator, etc. are integrated, generally has the configuration of a differential circuit because of the advantages in performance and configuration. It is thus preferable to form the amplifiers described above from differential circuits.

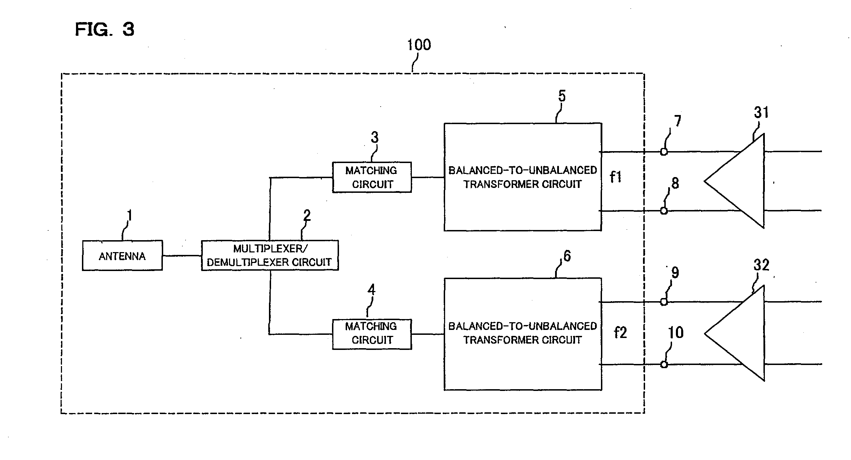

Thus, in order to construct, for example, a wireless LAN system using plural frequency bands, there is a need to use a high-frequency composite component, like the conventional one that includes a multiplexer/demultiplexer circuit and balanced-to-unbalanced circuits between an antenna 1 and two differential, high-frequency amplifier circuits 31 and 32 shown in FIG. 3.

The conventional high-frequency composite component, however, is not assumed for the use in the wireless LAN system or the like using plural frequencies. Hence, in order to meet the needs described above, it is necessary to connect plural elements in parallel or in series, which not only increases an area occupied by the circuits and requires a tedious job of appending and adjusting an impedance matching circuit, but also raises a concern that a loss in the signal increases due to the line running from component to component. Hence, the advent of a novel high-frequency composite component has been expected.

A novel high-frequency composite component to be devised is preferably a high-frequency composite component capable of: simplifying the circuits from the antenna to the input side of the high-frequency amplifier circuit; suppressing a loss in the signal on the way; and reducing the cost and the size.

It is therefore an object of the invention to provide a high-frequency composite component capable of: simplifying the circuits from the antenna to the input side of the high-frequency amplifier circuit; suppressing a loss in the signal on the way; and reducing the cost and the size, when a novel wireless LAN system is constructed.

In order to solve the above problems and thereby to achieve the above and other objects, each invention is configured as follows.

That is, in a first aspect the invention provides a high-frequency composite component formed by compositing plural circuit elements, configured in such a manner that the circuit elements include: an antenna that transmits and/or receives a high-frequency signal; a multiplexer/demultiplexer circuit that multiplexes plural frequency signals and/or demultiplexes a frequency signal to plural frequency signals; and at least two balanced-to-unbalanced transformer circuits that transform a balanced signal to an unbalanced signal and vice versa, and that: the antenna, the multiplexer/demultiplexer circuit, and the balanced-to-unbalanced transformer circuits are formed inside a multi-layer wiring board; and transmission and/or reception of an unbalanced signal is enabled between the antenna and the multiplexer/demultiplexer circuit, and transmission and/or reception of an unbalanced signal is enabled between the multiplexer/demultiplexer circuit and the balanced-to-unbalanced transformer circuits.

A second aspect of the invention provides the high-frequency composite component according to the first aspect, configured in such a manner that the antenna is connected to the multiplexer/demultiplexer circuit via an unbalanced line path, and the multiplexer/demultiplexer circuit is connected to respective unbalanced terminals of the balanced-to-unbalanced transformer circuits via unbalanced line paths.

A third aspect of the invention provides the high-frequency composite component according to the first or second aspect, configured in such a manner that input and output terminals, connected to balanced terminals of the balanced-to-unbalanced transformer circuits via balanced line paths and used to input and output a balanced signal, are further provided to a side surface or a bottom surface of the multi-layer wiring board.

A fourth aspect of the invention is the high-frequency composite component according to any of the first through third aspects, configured in such a manner that the antenna is provided on the multi-layer wiring board instead of being formed inside the multi-layer wiring board.

A fifth aspect of the invention is the high-frequency composite component according to any of the first through fourth aspects, configured in such a manner that each of the balanced-to-unbalanced transformer circuits includes a matching circuit that performs impedance matching between the corresponding balanced-to-unbalanced transformer circuit and the multiplexer/demultiplexer circuit.

According to the aspects of the invention configured as described above, it is possible to simplify the circuits from the antenna to the input side of the high-frequency amplifier circuit; suppress a loss in the signal on the way; and reduce the cost and the size, when a novel wireless LAN system or the like is constructed.

Also, according to the aspects of the invention, it is possible to make contributions to a reduction in the cost and the size of the overall system when a novel wireless LAN system or the like is constructed.

A sixth aspect of the invention provides the high-frequency composite component according to any of the first through fifth aspects, configured in such a manner that the multi-layer wiring board is a low-temperature co-fired ceramics substrate (LTCC).

A seventh aspect of the invention provides the high-frequency composite component according to any of the first through fifth aspects, configured in such a manner that the multi-layer wiring board is a multi-layer resin substrate.

An embodiment of the invention will now be described by way of further example only and with reference to the accompanying drawings, in which:-
FIG. 1 is a block diagram showing the circuitry of an embodiment of the invention.
FIG. 2 is a view used to describe a usage example of the embodiment.
FIG. 3 is a view used to describe another usage example of the embodiment.
FIG. 4 is a view used to schematically describe the structure of the embodiment, FIG. 4(A) being a plan view, FIG. 4(B) being a cross section taken along the line A-A, FIG. 4(C) being a cross section taken along the line B-B, and FIG. 4(D) being a side view on the right.

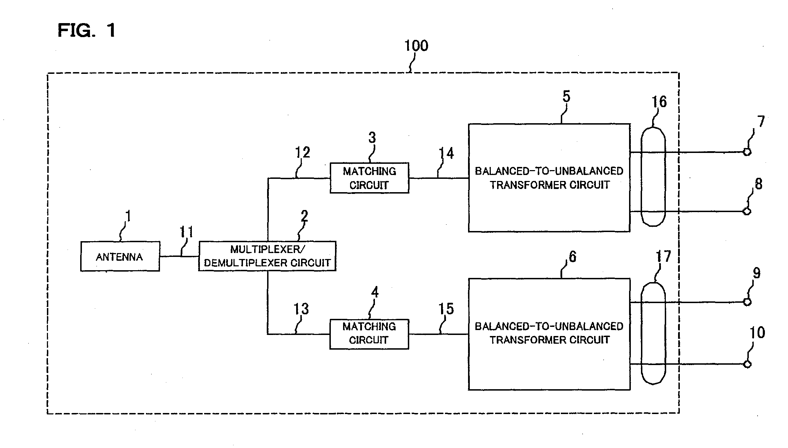

FIG. 1 is a block diagram showing the circuitry of a high-frequency composite component according to one embodiment of the invention.

A high-frequency composite component 100 of this embodiment is applied to a portion relating to, for example, wireless communications in a wireless LAN, and includes, as shown in FIG. 1, an antenna 1, a multiplexer/demultiplexer circuit 2, matching circuits 3 and 4, balanced-to-unbalanced transformer circuits (baluns) 5 and 6, and input and output terminals 7 through 10.

The terminal of the antenna 1 is electrically connected to one terminal of the multiplexer/demultiplexer circuit 2 via an unbalanced line path 11. Another first terminal of the multiplexer/demultiplexer circuit 2 is electrically connected to one terminal of the matching circuit 3 via an unbalanced line path 12. Still another second terminal of the multiplexer/demultiplexer 2 is electrically connected to one terminal of the matching circuit 4 via an unbalanced line path 13.

Also, the other terminal of the matching circuit 3 is electrically connected to the unbalanced terminal of the balanced-to-unbalanced transformer circuit 5 via an unbalanced line path 14. The other terminal of the matching circuit 4 is electrically connected to the unbalanced terminal of the balanced-to-unbalanced transformer circuit 6 via an unbalanced line path 15.

Further, the balanced terminal of the balanced-to-unbalanced transformer circuit 5 is electrically connected to the input and output terminals 7 and 8 via a balanced line path 16. The balanced terminal of the balanced-to-unbalanced transformer circuit 6 is electrically connected to the input and output terminals 9 and 10 via a balanced line path 17.

Each constituting element of the high-frequency composite component 100 will now be described in detail.

The antenna 1 transmits and/or receives a high-frequency signal. The multiplexer/demultiplexer circuit 2 is a circuit that demultiplexes a reception signal from the antenna 1 and multiplexes a signal from the matching circuit 3 and a signal from the matching circuit 4.

The matching circuit 3 is a circuit that is interposed between the multiplexer/demultiplexer circuit 2 and the balanced-to-unbalanced transformer circuit 5, and prevents a loss in signal power by performing impedance matching therebetween. The matching circuit 4 is a circuit that is interposed between the multiplexer/demultiplexer circuit 2 and the balanced-to-unbalanced transformer circuit 6, and prevents a loss in signal power by performing impedance matching therebetween.

The balanced-to-unbalanced transformer circuit 5 is a circuit that transforms an unbalanced signal from the matching circuit 3 to a balanced signal, and also transforms a balanced signal supplied to the input and output terminals 7 and 8 to an unbalanced signal. The balanced-to-unbalanced transformer circuit 6 is a circuit that transforms an unbalanced signal from the matching circuit 4 to a balanced signal, and also transforms a balanced signal supplied to the input and output terminals 9 and 10 to an unbalanced signal.

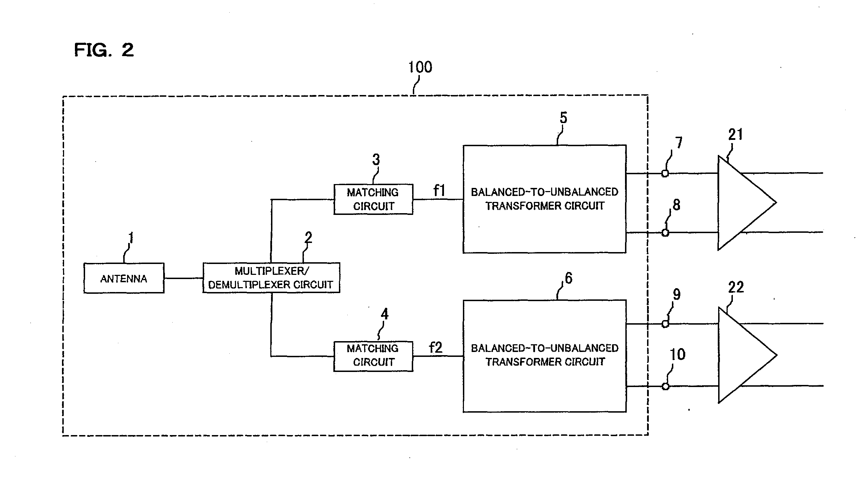

A usage example of the high-frequency composite component of this embodiment configured as described above will now be described with reference to FIG. 2 and FIG. 3.

Initially, a case where the high-frequency composite component 100 is used in the front end at the reception end of a wireless LAN will be described. In this instance, as is shown in FIG. 2, reception differential amplifier circuits 21 and 22 are connected to input and output terminals 7 and 8, and 9 and 10, respectively, and used.

In this case, a reception signal at the antenna 1 is an unbalanced signal, and the reception signal of this unbalanced signal is demultiplexed in the multiplexer/demultiplexer circuit 2 to form two unbalanced signals having different frequencies f1 and f2. The respective unbalanced signals having frequencies f1 and f2 are supplied to the balanced-to-unbalanced transformer circuit 5 and 6, respectively, by way of the matching circuits 3 and 4, respectively.

In the balanced-to-unbalanced transformer circuit 5, the unbalanced signal having the frequency f1 from the matching circuit 3 is transformed to a balanced signal. The transformed balanced signal having the frequency f1 is then supplied to the differential amplifier circuit 21 and undergoes differential amplification.

On the other hand, in the balanced-to-unbalanced transformer circuit 6, the unbalanced signal having the frequency f2 from the matching circuit 4 is transformed to a balanced signal. The transformed balanced signal having the frequency f2 is then supplied to the differential amplifier circuit 22 and undergoes differential amplification.

A case where the high-frequency composite component 100 is used in the front end at the transmission end in a wireless LAN will now be described. In this instance, as is shown in FIG. 3, transmission differential amplifier circuits 31 and 32 are connected to input and output terminals 7 and 8, and 9 and 10, respectively, and used.

In this case, a balanced signal having the frequency f1 and outputted from the differential amplifier circuit 31 is inputted to the balanced-to-unbalanced transformer circuit 5, while a balanced signal having the frequency f2 and outputted from the differential amplifier circuit 32 is inputted to the balanced-to-unbalanced transformer circuit 6.

In the balanced-to-unbalanced transformer circuit 5, the balanced signal having the frequency f1 is transformed to an unbalanced signal, and the transformed unbalanced signal having the frequency f1 is then inputted to the multiplexer/demultiplexer circuit 2 by way of the matching circuit 3.

On the other hand, in the balanced-to-unbalanced transformer circuit 6, a balanced signal having the frequency f2 is transformed to an unbalanced signal, and the transformed unbalanced signal having the frequency f2 is then inputted to the multiplexer/demultiplexer circuit 2 by way of the matching circuit 4.

The unbalanced signal having the frequency f1 and the unbalanced signal having the frequency f2, both inputted to the multiplexer/demultiplexer circuit 2, are multiplexed, and the multiplexed unbalanced signal is then supplied to the antenna 1.

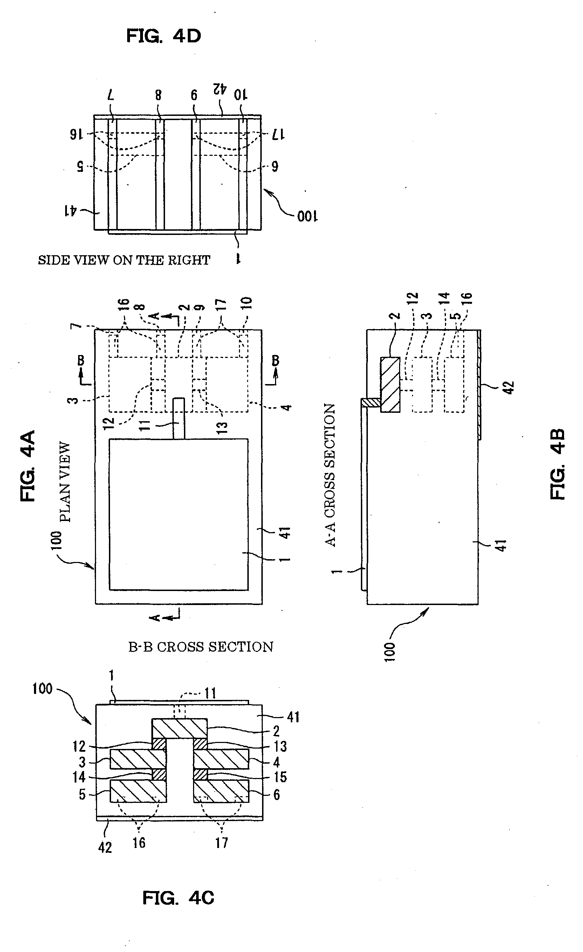

One example of the schematic structure of the high-frequency composite component of this embodiment will now be described with reference to FIG. 4.

FIG. 4(A) is a plan view of the high-frequency composite component, FIG. 4(B) is a cross section taken along the line A-A, FIG. 4(C) is a cross section taken along the line B-B, and FIG. 4(D) is a view on the right side.

The high-frequency composite component 100 is fabricated, as is shown in FIG. 4, by forming respective circuit elements with the use of multi-layer wiring in such a manner that the circuit elements are finally placed at their respective predetermined positions inside a multi-layer wiring board 41.

In other words, the high-frequency composite component 100 is fabricated, as is shown in FIG. 4, by placing the antennal 1 shown in FIG. 1 in a portion on the multi-layer wiring board 41 having specific thickness and size, forming or placing the multiplexer/demultiplexer circuit 2, the matching circuits 3 and 4, and the balanced-to-unbalanced transformer circuits 5 and 6, all shown in FIG. 1, at their respective predetermined positions inside the multi-layer wiring board 41, and by providing the input and output terminals 7 through 10 shown in FIG. 1 to the side surface on the right of the multi-layer wiring board 41.

Instead of the configuration above, the antenna 1 may be formed at the predetermined position inside the multi-layer wiring board 41. Also, the input and output terminals 7 through 10 may be provided to the bottom surface of the multi-layer wiring board 41 instead of the above-specified side surface.

To be more specific, the antenna 1 formed on the multi-layer wiring board 41 is electrically connected to the multiplexer/demultiplexer circuit 2 provided on the upper side of the interior of the multi-layer wiring board 41 via the unbalanced line path 11 through which an unbalanced signal is transmitted or received. The matching circuits 3 and 4 are provided inside the multi-layer wiring board 41 on the right and left below a portion where the multiplexer/demultiplexer circuit 2 is placed. The multiplexer/demultiplexer circuit 2 is electrically connected to the matching circuits 3 and 4 via the unbalanced line paths 12 and 13, respectively, through which unbalanced signals are transmitted and received.

Also, the balanced-to-unbalanced transformer circuits 5 and 6 are placed inside the multi-layer wiring board 41 below the matching circuits 3 and 4, respectively. Also, the matching circuits 3 and 4 are electrically connected to the balanced-to-unbalanced transformer circuits 5 and 6, respectively, via the unbalanced line paths 14 and 15, respectively, through which unbalanced signals are transmitted and/or received.

The balanced terminal of the balanced-to-unbalanced transformer circuit 5 is electrically connected to the input and output terminals 7 and 8, exposed from the side surface on the right of the multi-layer wiring board 41, via the running balanced line path 16 through which a balanced signal is transmitted and/or received. The balanced terminal of the balanced-to-unbalanced transformer circuit 6 is electrically connected to the input and output terminals 9 and 10, exposed from the side surface on the right of the multi-layer wiring board 41, via the running balanced line path 17 through which a balanced signal is transmitted and/or received.

A metal film 42 is formed on the lower surface of the multi-layer wiring board 41 except for a portion opposing the antenna 1. The metal film 42 functions as a grounding wire for the balanced-to-unbalanced transformer circuit 5 and 6 or the like.

The antenna 1, the multiplexer/demultiplexer circuit 2, the matching circuits 3 and 4, and the balanced-to-unbalanced transformer circuits 5 and 6 that together form the high-frequency composite component, are formed inside the multi-layer wiring board 41 as is shown in FIG. 4, by forming a metal film or metal wiring over a dielectric sheet followed by lamination, compression bonding, etc. Resin, such as epoxy, or a ceramic dielectric substance is used as a material of the dielectric sheet. Further, a low-temperature co-fired ceramics substrate (LTCC) or a multi-layer resin substrate is used as the multi-layer wiring board 41.

As has been described, in this embodiment, the antenna 1, the multiplexer/demultiplexer circuit 2, the matching circuits 3 and 4, and the balanced-to-unbalanced transformer circuits 5 and 6 are formed inside the multi-layer wiring board 41 with the use of multi-layer wiring, and these constituting elements are thereby composited inside the multi-layer wiring board 41, as is shown in FIG. 4.

According to this embodiment, it is thus possible to simplify the circuits from the antenna to the input side of the high-frequency differential amplifier circuit; suppress a loss in the signal on the way; and reduce the cost and the size, when a novel wireless LAN system is constructed.

Also, according to this embodiment, it is possible to make contributions to a reduction in the cost and the size of the overall system when a wireless system using plural frequency bands, for example, a wireless LAN system using plural frequencies, is constructed.

As has been described, according to the invention, it is possible to simplify the circuits from the antenna to the input side of the high-frequency differential amplifier circuit; suppress a loss in the signal on the way; and reduce the cost and the size, when a wireless system using plural frequency bands, such as a wireless LAN system using plural frequencies, is constructed.

Also, according to the invention, it is possible to make contributions to a reduction in the cost and the size of the overall system when a wireless system, such as a wireless LAN system using plural frequencies, is constructed.

## Claims

1. A high-frequency composite component formed by compositing plural circuit elements,
wherein said circuit elements include:
an antenna that transmits and/or receives a high-frequency signal;
a multiplexer/demultiplexer circuit that multiplexes plural frequency signals and/or demultiplexes a frequency signal to plural frequency signals; and
at least two balanced-to-unbalanced transformer circuits that transform a balanced signal to an unbalanced signal and vice versa, and
wherein:
said antenna, said multiplexer/demultiplexer circuit, and said balanced-to-unbalanced transformer circuits are formed inside a multi-layer wiring board; and
transmission and/or reception of an unbalanced signal is enabled between said antenna and said multiplexer/demultiplexer circuit, and transmission and/or reception of an unbalanced signal is enabled between said multiplexer/demultiplexer circuits and said balanced-to-unbalanced transformer circuits.

2. The high-frequency composite component according to Claim 1, wherein:
said antenna is connected to said multiplexer/demultiplexer circuit via an unbalanced line path, and said multiplexer/demultiplexer circuit is connected to respective unbalanced terminals of said balanced-to-unbalanced transformer circuits via unbalanced line paths.

3. The high-frequency composite component according to Claim 1 or 2, wherein:
input and output terminals, connected to balanced terminals of said balanced-to-unbalanced transformer circuits via balanced line paths and used to input and output a balanced signal, are further provided to a side surface or a bottom surface of said multi-layer wiring board.

4. The high-frequency composite component according to any of Claims 1 through 3, wherein:
said antenna is provided on said multi-layer wiring board instead of being formed inside said multi-layer wiring board.

5. The high-frequency composite component according to any of Claims 1 through 4, wherein:
each of said balanced-to-unbalanced transformer circuits includes a matching circuit that performs impedance matching between said corresponding balanced-to-unbalanced transformer circuit and said multiplexer/demultiplexer circuit.

6. The high-frequency composite component according to any of Claims 1 through 5, wherein:
said multi-layer wiring board is a low-temperature co-fired ceramics substrate (LTCC).

7. The high-frequency composite component according to any of Claims 1 through 5, wherein:
said multi-layer wiring board is a multi-layer resin substrate.
